# FASCICULE DE BREVET EUROPEEN

(11) **EP 1 258 465 B1**
(45) Date de publication et mention de la délivrance du brevet: **15.08.2012**
(21) Numéro de dépôt: 02291194.5
(22) Date de dépôt: 14.05.2002
(51) Int. Cl.: C04B 28/02, H05B 6/10

(54) **Composition de beton a poudres reactives et preparation d'une piece a partir de celle-ci**
Reaktivpulver Betonzusammensetzung und Verfahren zur Hestellung eines Formteiles damit
Concrete composition of reactive powders and method for making an element thereof

(30) Priorité: 15.05.2001 FR 0106366
(43) Date de publication de la demande: 20.11.2002
(73) Titulaire: Electricité de France, 75008 Paris (FR)
(72) Inventeur: Septfons, Martine, 91540 Mennecy (FR); Risson, Tania, 69001 Lyon (FR); Maximilien, Sandrine, 69100 Villeurbanne (FR); Fantozzi, Gilbert, 69330 Meysieu (FR)
(74) Mandataire: Audier, Philippe André

(56) Documents cités:
- EP-A- 0 518 777
- DE-A- 19 752 045
- FR-A- 2 722 813
- FR-A- 2 735 415
- GB-A- 2 148 871
- US-A- 4 921 222
- CHEMICAL ABSTRACTS, vol. 110, no. 20, 15 mai 1989 (1989-05-15) Columbus, Ohio, US; abstract no. 178510u, K.NOBUYOSHI: "Glass fiber-reinforced cement plates" XP000019559 & JP 63 274643 A (ASAHI GLASS CO., LTD) 11 novembre 1998 (1998-11-11)

## Description

La présente invention a trait à une composition de béton à poudres réactives (BPR), ainsi qu'à un procédé de préparation d'une pièce, telle qu'une plaque, à partir de celle-ci.

Le domaine technique de l'invention peut être défini comme celui des matériaux destinés en particulier aux plaques de cuisson, notamment les plaques de cuisson électriques par induction.

Actuellement, les plaques de cuisson par induction sont essentiellement réalisées en vitrocéramique et le coût élevé de celle-ci contribue pour une large part au coût élevé de ces appareils. On a ainsi constaté que, depuis 1992, le marché des plaques électriques diminuait fortement au profit des plaques au gaz, qui sont beaucoup moins chères.

Il serait donc intéressant de disposer d'un matériau de faible coût pouvant remplacer la vitrocéramique dans les plaques et tables de cuisson électriques par induction. Ce matériau, utilisé comme support dans les foyers de cuisson par induction, doit répondre correctement à de nombreuses sollicitations, par exemple, magnétiques ou thermomécaniques, auxquelles il se trouve soumis dans les conditions de son utilisation.

C'est ainsi que le matériau employé comme support pour les foyers de cuisson par induction doit respecter certaines propriétés, définies par des normes relatives à la sécurité des appareils électroménagers (norme EN60-335-2-6), et que, de plus, il doit satisfaire à des conditions liées à son utilisation :
- la plaque pouvant être soumise à des surchauffes accidentelles à 400°C, à cause notamment d'irrégularités de la surface du récipient en contact avec la plaque de cuisson, le matériau ne doit pas être inflammable, ni dégager de gaz toxiques et la dégradation admise de la surface à cette température ne doit pas présenter de risque pour l'utilisateur ;
- le matériau doit être agréé, par exemple, par la FDA (Food and Drug Administration) pour un contact direct avec les aliments.

L'ensemble des propriétés idéales, des conditions et des normes à respecter pour le matériau support de la table de cuisson est présenté dans le tableau I.

**Tableau I**

| Cahier des charges du matériau pour plaque de cuisson par induction | | |
|---|---|---|
| Propriétés | Caractéristiques physiques du matériau correspondantes | Normes ou conditions à remplir |
| Transparence aux champs magnétiques | - pas de phase ferromagnétique | EN60-335-2-6 |
| | - perméabilité magnétique (µ ≅ 1) | |
| Isolant électrique | - courant de fuite (< 0,25 mA) | EN60-335-2-6 |
| | | |
| Isolant thermique (la plaque et « l'électronique » ne doivent pas chauffer | - conductivité thermique | 1,7 W m⁻¹K⁻¹ |
| Résistance au choc thermique (eau froide sur plaque chaude) | - coefficient de dilatation thermique faible | EN60-335-2-6 ΔTc ≤ 300°C, de l'ordre de 5.10⁻⁶ °K⁻¹ |
| Résistance au choc mécanique | - module d'YOUNG (en flexion), contrainte à rupture en flexion, ténacité | EN60-335-2-6 |
| Résistance à l'usure (abrasion) | - dureté | |
| Résistance à certains produits chimiques (détergents) et contact alimentaire | - sensibilisé à l'hydrolyse (neutre, acide, basique, en température) | ISO 719, DIN 12116, ISO 695 (utilisées pour la vitrocéramique) |
| | - composition neutre | |
| Entretien facile | - planéité et homogénéité de la surface | Observation macroscopique |
| | - absence de porosité ouverte | |
| | | |
| Coût | - moins élevé que la vitrocéramique à qualité égale | 50 francs |
| Faisabilité a l'échelle industrielle | | Produit requérant un procédé de fabrication déjà maîtrisé |
| Dimensions de la plaque (mm) | - 500 x 500 x 4 | |

Ce cahier des charges est assez complexe avec des points qui doivent parfois faire l'objet d'un compromis. Par exemple, la diffusivité thermique doit être plutôt faible pour avoir un matériau isolant thermiquement, et plutôt élevée pour avoir un bon comportement vis-à-vis du choc thermique.

Il existe donc un besoin pour un matériau convenant particulièrement pour la fabrication de tables de cuisson électriques par induction, qui soit d'un faible coût, et qui réponde, entre autres, à l'ensemble des critères, normes et exigences mentionnés ci-dessus, notamment dans le tableau I, relatif au cahier des charges d'un tel matériau.

Le but de l'invention est, entre autres, de répondre à ce besoin.

Ce but et d'autres encore sont atteints, conformément à l'invention, par une composition de béton à poudres réactives comprenant les constituants suivants, dont les proportions sont exprimées en teneur en poids de constituant par rapport à la teneur en poids de ciment :
- ciment : 1 ;
- fumée de silice : 0,20 à 0,25, de préférence 0,23 ;
- quartz broyé : 0,35 à 0,40, de préférence 0,39 ;
- sable : 0,40 à 0,60, de préférence 0,50 ;
- fibres de verre totales : 0,05 à 0,10, de préférence 0,07 ;
dont :
- fibres de verre Haute Densité « HD » : 0,0005 à 0,005, de préférence 0,001 ;
- fibres de verre Haute Performance « HP » : 0,0495 à 0,0995, de préférence 0,0690 ;
- fluidifiant : 0,01 à 0,02, de préférence 0,012 ;
- eau totale : 0,20 à 0,25, de préférence 0,23.

La composition de béton selon l'invention se caractérise par une formulation spécifique, comprenant des constituants spécifiques, dans des proportions spécifiques.

La composition de béton selon l'invention convient particulièrement bien à une utilisation dans la fabrication de tables de cuisson électriques par induction, elle participe notamment aux propriétés recherchées définies plus haut dans le cahier des charges.

La composition selon l'invention est, en outre, fondamentalement, d'un coût beaucoup plus faible que les vitrocéramiques mises en oeuvre jusqu'alors pour un usage analogue.

La composition selon l'invention, de manière totalement surprenante, possède des propriétés mécaniques et thermiques jamais présentées auparavant pour du béton, tel que du béton à poudres réactives.

La composition selon l'invention comprend, d'une part, la combinaison, pour former la charge minérale de trois composés spécifiques, à savoir : la fumée de silice, le quartz broyé et le sable, dans des proportions spécifiques, d'autre part, la combinaison en tant que fibres de renfort de deux fibres de verre différentes, à savoir les fibres HP et HD, de nouveau dans des proportions spécifiques.

En outre, le ciment, combiné à la fumée de silice et au quartz broyé, joue le rôle de matrice ou liant pour l'ensemble des matériaux.

C'est de manière inattendue, la combinaison, d'une part, de ces trois composés spécifiques en proportions spécifiques, d'autre part, la combinaison de ces deux fibres spécifiques en proportions spécifiques en tant que fibres de renfort, et enfin du liant, qui est, pour l'essentiel, à la base des excellentes propriétés de la composition de béton selon l'invention.

Enfin, la teneur spécifique en fluidifiant selon l'invention permet d'obtenir une composition de béton aux propriétés rhéologiques intéressantes, qui satisfait les exigences en termes de planéité du produit final dans l'application essentielle de la composition de béton selon l'invention.

L'invention a trait, en outre, à un procédé de préparation d'une pièce, telle qu'une plaque, à partir de la composition de béton de poudres réactives, telle qu'elle a été décrite ci-dessus ; ledit procédé comprenant les étapes successives suivantes :
- mélange et malaxage des constituants de la composition de béton ;
- coulage du mélange obtenu dans un moule de forme adaptée à celle de la pièce à obtenir ;
- application d'un produit de cure sur la surface libre du mélange coulé dans le moule ;
- démoulage, moyennant quoi, on obtient une pièce crue ;
- séchage ;
- traitement thermique.

De manière avantageuse, ladite pièce se présente sous la forme d'une plaque, de préférence, d'une épaisseur maximale de 4 mm.

Avantageusement, ladite plaque peut être pourvue d'un revêtement.

La pièce obtenue, telle qu'une plaque selon l'invention, est plane, avec une surface parfaitement lisse. Ces plaques présentent d'excellentes propriétés qui sont notamment telles que décrites ci-après.

Le matériau a généralement un module élastique de l'ordre de 35 Gpa, la contrainte à rupture en flexion 4 points se situe généralement entre 15 et 20 MPa.

Des mesures de dilatation thermique successives ont été effectuées entre la température ambiante et 350°C sur un même échantillon préalablement traité thermiquement à 350°C. Le coefficient de dilatation est stable au cours des cycles et se situe entre 5,5 et 7,5*10⁻⁶ K⁻¹.

Des essais de choc thermique sévères ont été réalisés sur des échantillons prismatiques, qui sont plongés dans l'eau à 25°C, après chaque montée en température. Les échantillons supportent un choc thermique d'amplitude de 300°C, sans subir de dégradation notable.

Les plaques résistent à des chocs mécaniques répétés pouvant atteindre une énergie de 1 joule.

L'invention concerne également un appareil de cuisson électrique, par exemple à induction comprenant ladite plaque.

Un tel appareil, tout en possédant les mêmes performances qu'un appareil muni d'une plaque en vitrocéramique, est d'un coût nettement inférieur.

L'invention va maintenant être décrite plus en détail dans la description qui va suivre, donnée à titre illustratif et non limitatif, en référence au dessin joint, dans lequel :
- la figure 1 est un graphique (T (°C), en ordonnée et t (en heures), en abscisse) qui illustre une procédure de séchage, d'une pièce crue, par exemple d'une plaque, suivie d'une procédure de traitement thermique de la plaque vierge (ce traitement thermique ne comprend pas les traitements thermiques du revêtement), utilisées lors de la préparation d'une plaque par le procédé de l'invention ;
- La figure 2 est un graphique (T, t) qui illustre une autre procédure de cuisson d'une pièce, par exemple d'une plaque sans revêtement, après un séchage préalable à 110°C de la pièce crue, dans les mêmes conditions que celles de la figure 1 ;
- la figure 3 est un graphique (T, t) qui illustre une procédure de cuisson d'une plaque vierge séchée sur laquelle on a appliqué un revêtement de type émail ;
- la figure 4 est un graphique (T, t) qui illustre une procédure de cuisson d'une plaque vierge séchée pourvue d'un revêtement de RHODEFTAL® 200 ES ;
- la figure 5 est un graphique (T, t) qui illustre une procédure de cuisson d'une plaque vierge séchée avec un revêtement de KERIMID® 701 A ;
- la figure 6 est un graphique qui présente les courbes obtenues en dilatométrie pour un échantillon non traité thermiquement. En abscisse, est porté le temps t (en secondes), en ordonnée, sont portés la température T (en °C) à gauche et le déplacement D (en mm) à droite. La courbe en gras (en haut) donne l'évolution de la température en fonction du temps, et la courbe du bas donne l'évolution du déplacement en fonction du temps.

La composition selon l'invention est une composition de béton du type à poudres réactives (BPR).

Les bétons à poudres réactives sont connus de l'homme du métier et l'on pourra se reporter à ce propos à l'ouvrage « Les bétons de poudres réactives (BPR) à Ultra Haute Résistance » dans Annales de l'Institut Technique du Bâtiment et des Travaux Publics », n° 532, Mars-Avril 1995, Série : BETON 320.

Bien que rentrant dans le cadre très général des bétons à poudres réactives, la composition selon l'invention utilise notamment des renforts spécifiques, tels que des fibres de verre HD et HP et une adjuvantation spécifique dans des proportions spécifiques.

Le liant hydraulique mis en oeuvre est généralement un ciment.

Ce ciment est généralement un ciment connu sous le nom de ciment Portland artificiel. Il s'agit, de préférence, d'un ciment à haute teneur en silice (HTS) car ce type de ciment permet d'obtenir des meilleures propriétés mécaniques et rhéologiques. On choisira donc, par exemple, un ciment de type CPA HTS.

Un tel ciment a généralement une granulométrie définie par un diamètre moyen de 11 à 15 µm.

La composition de béton selon l'invention comprend, en outre, une combinaison de trois charges différentes spécifiques.

Le premier des constituants de la charge est de la fumée de silice (FS).

La fumée de silice remplit généralement les trois fonctions suivantes :
- remplissage des vides (entre les particules de ciment) ;
- amélioration de la rhéologie par effet de lubrification dû à la parfaite sphéricité des particules ;
- production d'hydrates secondaires lors de la réaction pouzzolanique avec la chaux.

Une fumée de silice utilisable dans la composition de l'invention est notamment la fumée de silice MST, commercialisée par la Société SEPR®, qui est une silice thermique constituée essentiellement de micropièces de silice vitreuse.

Le second des constituants rentrant dans la combinaison des trois éléments constituant la charge est le quartz broyé.

Le quartz broyé est un agent nécessaire pour les compositions de BPR, en particulier celles qui auront à subir un traitement thermique.

Le quartz broyé est, de préférence, un quartz dont la taille de grain moyenne est de 5 à 25 µm, de préférence de 10 µm.

Un tel quartz broyé est commercialisé, par exemple, par la Société SIFRACO^{®}, sous la dénomination Millisil^{®} C400. Un autre quartz broyé adéquat est celui commercialisé par la Société SIFRACO^{®}, sous la dénomination SIKRON^{®} C500.

Enfin, le troisième constituant de la charge est du sable.

On choisit, de préférence, un sable quartzeux dont le diamètre moyen est, par exemple, de 250 µm, pour les raisons suivantes :
- grande dureté ;
- possibilité d'obtenir de très bonnes interfaces entre la pâte et les granulats ;
- ce sable est très disponible et peu onéreux.

En outre, un sable naturel, plutôt qu'un sable de concassage, sera préféré, car il nécessite une moins grande quantité d'eau du fait qu'il est constitué de particules plus sphériques.

Un sable contenant pour la composition de l'invention est, par exemple, le sable de qualité BE31, commercialisé par la Société SIFRACO^{®}.

Une composition, qui ne contiendrait que les éléments énumérés ci-dessus, ne permettrait toutefois pas de répondre aux spécifications du cahier des charges, en ce qui concerne le comportement mécanique, en particulier pour ce qui est de la résistance à un choc « dur » et en ce qui concerne le comportement thermique (choc thermique).

Selon l'invention, on incorpore, en tant que renfort fibreux dans la composition du béton de l'invention, une combinaison de fibres de verre, dites fibres « Haute Densité » « HD », et de fibres de verre dites fibres « Hautes Performances » « HP », dans des proportions spécifiques : à savoir, 0,0005 à 0,005, de préférence 0,001 pour les fibres « HD », et 0,0495 à 0,0995, de préférence 0,0690 pour les fibres « HP ».

Les fibres, dites « HD » ont un rôle extrêmement bénéfique lors d'un traitement thermique, puisque aucune perte des propriétés mécaniques n'est enregistrée, après traitement thermique des compositions selon l'invention, incluant de telles fibres. Le rôle principal de ce type de fibres est d'éviter la microfissuration induite par l'autodessication. Leur particularité est de se disperser dans l'eau : elles deviennent alors monofilamentaires et se répartissent de façon homogène dans tout le volume de la pièce.

Les fibres, dites « HD », se présentent généralement en paquets, faisceaux, ou mèches comprenant des filaments collés, liés, ensemble, par exemple de un à quelques centaines de filaments. Les fibres HD ne sont donc pas monofilamentaires.

Les fibres, dites « HP », permettent, quant à elles, de passer d'un comportement fragile à un mode d'endommagement progressif. Ces fibres assurent un renfort mécanique de la pièce en béton par une amélioration de la résistance mécanique et un apport de ductilité, mais contrairement aux fibres HD, elles n'assurent pas le comblement du liant.

Les fibres, dites « HP » se présentent généralement sous la forme de (micro)filaments individuels. Ces fibres sont donc monofilamentaires.

Ces deux types de fibres de verre ont des longueurs différentes, qui sont généralement par exemple d'environ 10 mm à 12 mm pour les fibres HD et de 3 à 24 mm, par exemple 3, 6, 12 ou 24 mm pour les fibres HP.

Les deux types de fibres sont, par exemple, fabriqués par la Société VETROTEX^{®} et sont disponibles auprès de la Société LAMBERT et RIVIERE, sous la dénomination de « Fibres Cem-Fil^{®} Anti-Crak HD ou HP ».

A titre d'exemple, les caractéristiques des fibres Cem-Fil^{®} Anti-Crak HD et HP sont les suivantes :
- module élastique : 72 Gpa ;
- diamètre des filaments : 14 micromètres ;
- densité : 2,68 ;
- longueur : 12 mm.

En outre, les fibres Anti-Crak HD comportent 212 millions de fibres/kg, ont un rapport longueur/diamètre de 857,1 et une superficie spécifique de 105 m²/kg, tandis que les fibres Anti-Crak HP comptent 2,1 millions de fibres/kg.

Comme on l'a déjà indiqué plus haut, les fibres Anti-Crak HD se présentent sous la forme de microfilaments, en raison de la dispersion des faisceaux de fibres au contact de l'humidité, et les fibres Anti-Crak HP se présentent sous la forme de mèches de 100 filaments collés ensemble.

Les fibres de verre « HD » et « HP », outre leur bonne résistance à la traction et leur module d'YOUNG adapté, présentent une bonne tenue en milieu alcalin.

Ce dernier point est particulièrement important ; en effet, la solution interstitielle d'une pâte de ciment hydraté étant très basique (pH de 13 à 14) ; il est primordial que les fibres utilisées ne subissent pas de dégradation en milieu alcalin. Les fibres alcali-résistantes ont la particularité de contenir une grande quantité de ZrO₂ - et parfois également de terres rares - de ce fait, lorsque les filaments sont fondus et recuits, par exemple, à environ 400°C - les oxydes de zirconium et de terres rares se concentrent en surface et protègent ainsi la fibre des attaques alcalines. Enfin, les fibres de verre alcali-résistantes, mises en oeuvre dans la composition de ciment selon l'invention, sont d'un faible coût.

Les proportions spécifiques de chacune des fibres HD et HP, mentionnées ci-dessus, permettent d'obtenir une composition offrant le meilleur compromis, quant à ses propriétés, tout en étant par ailleurs facile à mettre en place.

En dehors de ces proportions spécifiques de chacune des fibres, la composition de béton selon l'invention n'est pas satisfaisante.

La combinaison des fibres HP et HD, dans les proportions indiquées, garantit en particulier une répartition homogène des fibres dans tout le volume et évite notamment l'endommagement des pièces lors du démoulage.

La proportion d'eau totale, dans la composition de béton selon l'invention, est également importante et est spécifiquement de 0,20 à 0,25 et de préférence de 0,23 (rapport E/C).

Une telle proportion d'eau permet une mise en place facile de la pâte obtenue par malaxage, à partir de la composition de béton selon l'invention, sans diminution des propriétés mécaniques.

Du fait des exigences, en termes de planéité du produit final préféré, auquel est destinée la composition de béton selon l'invention, à savoir une plaque ou table de cuisson, on incorpore dans la composition du béton selon l'invention un fluidifiant, dispersant ou superplastifiant, dans la proportion de 0,12 (teneur en poids de fluidifiant/teneur en poids de ciment), ce qui permet d'obtenir une composition de béton de type autolissant ou autonivelant.

Le fluidifiant peut être choisi parmi les fluidifiants couramment utilisés dans ces compositions de béton : il pourra s'agir, par exemple, d'un poly(éthylène glycol) phosphonaté, tel que le produit commercialisé sous la dénomination CHRYSOFLUID OPTIMA^{®} 100 (CHRYSOFLUID^{®} 3 000) par la Société CHRYSO ADJUVANTS^{®} d'Issy-les-Moulineaux (France). Il s'agit effectivement d'un poly(éthylène glycol) phosphonaté à 30 % d'extrait sec.

La préparation d'une pièce, telle qu'une plaque, à partir de la composition de béton selon l'invention, telle qu'à été décrite ci-dessus, comporte un certain nombre d'étapes spécifiques, réalisées dans des conditions spécifiques.

Aucune de ces étapes ne doit être négligée car elles sont chacune déterminantes pour les propriétés mécaniques et thermiques du matériau final.

La première étape est une étape de mélange et de malaxage des constituants de la composition de béton. Il est à noter que la composition de béton selon l'invention, qui est une composition BPR, possède la particularité, comme tous ces bétons, de ne nécessiter qu'une très faible quantité d'eau de gâchage, grâce, semble-t-il, à une granulométrie optimale du mélange initial.

La procédure, généralement suivie par le mélange et le malaxage, est la suivante : on mélange tout d'abord le fluidifiant et l'eau.

Les autres matières, qui sont généralement sous la forme de poudres, sont mélangées à sec et homogénéisées pendant au moins plusieurs minutes, par exemple 10 minutes, puis une partie de l'eau et du fluidifiant est introduite. Cette première partie du mélange d'eau de gâchage et de fluidifiant, introduite dans le mélange de poudres, représente généralement de 1/3 à 1/2 du mélange total d'eau de gâchage et de fluidifiant. Après quelques minutes de malaxage, par exemple 5 à 15 minutes, le reste du mélange d'eau et de fluidifiant est introduit.

Le malaxage continue ensuite pendant quelques minutes : à savoir, par exemple de 5 à 10 ou 15 minutes. Cette dernière étape est essentielle ; en effet, dans les premiers temps du malaxage, le mélange garde un aspect granuleux. Plus la durée du malaxage augmente, et plus les grains « fixent » l'eau : le mélange prend peu à peu un aspect pâteux avec une fluidité permettant une mise en place aisée. La mise en place aisée est la conséquence du rapport spécifique E/C (Eau sur Ciment), de la proportion de liant spécifique, de la proportion spécifique de fibres de renfort HP et HC, et de la proportion spécifique de fluidifiant, utilisés dans la composition de l'invention.

A l'issue du mélange et du malaxage, on procède à la coulée et à la mise en place de la composition dans un moule de forme adéquate, correspondant à la forme finale de la pièce que l'on cherche à obtenir.

Il peut être nécessaire, sans que cela soit indispensable, d'appliquer quelques vibrations au moule, afin de parfaire la mise en place.

Dans l'application préférée de la composition de béton selon l'invention, à savoir les tables ou plaques chauffantes électriques par induction, pour des raisons évidentes de rendement du système de chauffage par induction, la plaque à réaliser ne doit pas dépasser 4 mm d'épaisseur.

Du fait des constituants et des proportions spécifiques de la composition de l'invention, celle-ci est généralement autolissante ou autonivelante et la mise en oeuvre de vibrations, lors de la mise en place, peut être ainsi substantiellement évitée.

On applique ensuite un produit de cure sur la surface libre (à l'état frais) de la composition de béton.

Il est à noter à ce stade que généralement l'élaboration des bétons à poudres réactives comprend une étape de pressage avant et pendant la prise qui a un triple effet : diminution de l'air occlus, essorage et compensation du retrait chimique.

Le procédé de l'invention permet précisément d'éviter cette étape supplémentaire et d'arriver aux propriétés, par exemple mécaniques, souhaitées, grâce aux constituants spécifiques en proportions spécifiques utilisées dans la composition de l'invention, ainsi qu'à la rhéologie résultante de celle-ci et aux traitements thermiques spécifiques mis en oeuvre, décrits plus loin.

Le produit de cure permet d'éliminer le risque d'un départ d'eau liée en cours de prise et par suite, d'éviter la déformation des pièces, par exemple des plaques, lors du traitement thermique ultérieur.

Les produits de cure utilisés sont des produits organiques couramment utilisés dans l'industrie du béton. Cependant, dans l'application selon l'invention, il a été constaté, de manière surprenante, qu'il était avantageux d'utiliser des huiles ou graisses silicones résistant à une température supérieure ou égale à 110°C, contrairement aux produits classiques de cure utilisés avec le béton. Une telle huile ou graisse silicone est, par exemple, la graisse silicone disponible sous le nom de graisse silicone 500 - KF 6 088 de CRC^{®} Industries, qui n'est pas un produit de cure, connu comme tel. Elle joue cependant ce rôle pour l'application prévue dans le cadre de la présente invention, qui est un peu particulière à cause du traitement thermique, qui fait que certains produits de cure ne résistent pas à ce traitement.

L'utilisation de telles huiles ou graisses silicone pour jouer le rôle de produits de cure est inattendue et n'a jamais été décrite, ni suggérée, dans l'art antérieur.

On procède ensuite au démoulage de la pièce, par exemple de la plaque, ce démoulage est généralement réalisé au minimum 24 heures, par exemple à 48 heures environ, après la coulée.

On obtient ainsi une pièce dite pièce « crue ».

Puis, on réalise le séchage de la pièce (pièce « crue ») à une température modérée, généralement de 100 à 120°C, de préférence de 105 à 115°C, par exemple de 110°C, jusqu'à ce que la pièce (telle qu'une plaque) ne présente plus de variation de poids à l'issue du séchage, c'est-à-dire pendant une durée généralement de 5 à 15 heures, par exemple 10 heures. Ce séchage peut être réalisé, par exemple, en plaçant la pièce crue, telle qu'une plaque, dans un appareil de type étuve ou four.

Le séchage a pour but d'éliminer l'eau libre dans la pièce, telle qu'une plaque, car si l'on procédait au traitement thermique directement à l'issue du démoulage, l'eau libre existant dans la pièce, telle qu'une plaque, se vaporiserait et provoquerait son explosion.

Le séchage peut être réalisé dans tout appareil adéquat, par exemple dans une étuve ou dans un four. Dans le cas d'une étuve, on place directement la pièce, telle qu'une plaque, dans l'étuve se trouvant déjà à la température adéquate de séchage et on l'y laisse à cette température, qui est la température voulue, pendant la durée voulue.

Dans le cas d'un four, celui-ci se trouve généralement initialement à la température ambiante (par exemple 20°C) et on commence donc par réaliser une montée en température très lente, par exemple à raison de 10°C/heure depuis la température ambiante jusqu'à la température de séchage, par exemple 110°C, et on observe ensuite un palier à la température de séchage, par exemple 110°C, pendant la durée voulue.

Avantageusement, en particulier, dans le cas où la pièce préparée se présente sous la forme d'une plaque ou table pour la cuisson électrique par induction, on applique, à l'issue de l'étape de séchage et préalablement au traitement thermique, un revêtement sur l'une des surfaces de la pièce, telle qu'une plaque, de préférence, il s'agit de la surface « côté moule », qui est celle destinée à jouer le rôle de surface de cuisson.

Ce revêtement est choisi, par exemple, parmi les émaux à basse température, c'est-à-dire dont la température de cuisson n'excède pas, généralement, 550°C et les polymères organiques.

Ces deux matériaux assurent à la fois un rôle de protection de la pièce, telle qu'une plaque, tout en remplissant les exigences du cahier des charges, énumérées ci-dessus, en ce qui concerne, en particulier, la température d'utilisation, le comportement à l'impact, la compatibilité avec les produits alimentaires, la facilité de nettoyage et l'esthétique.

Les émaux à basse température doivent, lors de leur revêtement, être cuits à une température n'excédant pas 550°C. Cette température est tout à fait compatible avec le béton qui n'aurait pas supporté les températures bien plus élevées - de l'ordre de 900 à 1 000°C - nécessaires pour les émaux classiques.

Un émail basse température adéquat est, par exemple, l'émail commercialisé par la Société FERRO^{®}, sous la référence EG 2868/2, qui se présente sous la forme d'une poudre blanche, qu'il est possible éventuellement de pigmenter. L'émail peut être appliqué par tout procédé connu dans ce domaine de la technique. Des conditions convenant particulièrement bien, par exemple pour le produit de la Société FERRO^{®}, mentionné ci-dessus, sont généralement les suivantes :
- eau/poudre = 0,60 à 0,80, de préférence 0,75 en masse ;
- application au pistolet sur la pièce, par exemple la plaque, vierge, préalablement séchée, par exemple à 110°C ;
- évaporation du liant pendant 2 h à 110°C ;
- cuisson de l'émail à 550°C pendant 30 minutes.

Parmi les polymères organiques, deux produits conviennent particulièrement bien, il s'agit, tout d'abord, du RHODEFTAL® 200 ES, commercialisé par la Société CIBA^{®}, qui est un polyamide-imide (PAI), polymère thermoplastique présentant une bonne tenue en température : 200 à 250°C, selon les données du fournisseur. Il appartient donc à la classe des polymères thermostables. Ce produit se présente sous la forme d'un liquide très visqueux de couleur brune. Il peut être appliqué en l'état avec une spatule, ou sous la forme d'une solution dans un solvant, par exemple, la N-méthylpyrrolidone (NMP), N,N-diméthyl formamide (DMF), dans ce cas, on peut appliquer le revêtement au pinceau, par exemple, en diluant le produit avec de une à deux parties de DMF pour trois parties de RHODEFTAL® 200 ES en masse, la dilution permet d'améliorer l'aspect de surface final. La mise en oeuvre de ce polymère nécessite ensuite une étape de séchage, puis l'ensemble du substrat béton et du revêtement polymère est ensuite porté en température selon un cycle de cuisson spécifique.

L'autre polymère organique est une résine bismaléimide, commercialisée par la Société CIBA^{®}, sous le nom de KERIMID^{®} 701 A. Ce produit se présente sous la forme d'une résine de couleur brune assez foncée, très visqueuse. Il peut être appliqué au pinceau ou à la spatule et il peut être éventuellement dilué. De même que pour le RHODEFTAL® cité plus haut, une étape de séchage est nécessaire, afin d'évaporer le solvant. On procède ensuite à une étape de cuisson selon un cycle thermique spécifique.

Ces deux produits permettent d'obtenir un aspect de surface correct, ils sont d'une mise en oeuvre aisée et leur température de cuisson est relativement basse.

En outre, ces produits peuvent être modifiés pour des applications hautes températures et pigmentés.

Enfin, dans tous les cas, que l'on applique ou non un revêtement sur la composition de béton, on réalise obligatoirement un traitement thermique ou cuisson.

Ce traitement thermique, dans le cas de compositions de béton vierges, séchées, non revêtues, est généralement réalisé à une température minimale de 250°C et, de préférence, de 300 à 350°C, pendant une durée minimale de 1 heure et de préférence d'environ 4 heures.

Pour les compositions de béton revêtues, la température mise en oeuvre varie notamment en fonction du revêtement éventuel utilisé.

Une température de 550°C est, par exemple, atteinte dans le cas d'un revêtement de type émaillage, tandis que cette température pourra être, par exemple, de 200 à 250°C dans le cas d'un revêtement en un polymère organique.

L'intérêt d'un traitement thermique est, notamment, de stabiliser le matériau en modifiant la microstructure (transformation irréversible des différentes phases).

De plus, pour les bétons contenant de la fumée de silice, le chauffage, après la prise du ciment à une température comprise entre 70 et 90°C, accélère fortement la réaction pouzzolanique, tout en modifiant la structure des hydrates formés. On obtient, par ce type de traitement thermique, des résistances supérieures à celles obtenues après très long terme sur des échantillons non traités.

Dans notre cas, le choix de la température maximale du traitement est lié aux conditions d'utilisation du matériau pour l'application, qui est généralement de l'ordre de 300 à 350°C, ainsi qu'au type de revêtement retenu (dans le cas où la plaque est revêtue d'un émail, il est nécessaire de monter, par exemple, jusqu'à une température de 550°C). Ces températures relativement élevées peuvent conduire à des pertes de performances mécaniques du matériau. Mais l'introduction de fibres permet de limiter ces pertes.

Les traitements thermiques sont réalisés après séchage des pièces, par exemple, à 110°C. Cette étape est indispensable, elle permet, comme on l'a déjà indiqué, d'éliminer les risques d'explosion lors des traitements thermiques ultérieurs, dues à la présence d'eau libre au sein du matériau.

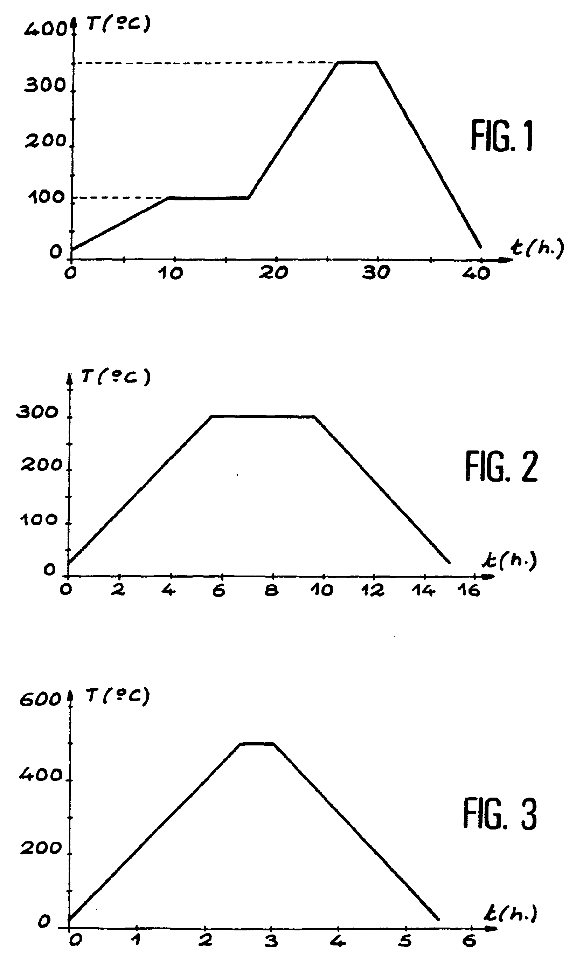

Une procédure de séchage, puis de traitement thermique préféré pour la composition de béton, par exemple sous la forme d'une plaque seule (c'est-à-dire sans aucun revêtement) est donc la suivante. Elle est illustrée sur la figure 1 :
- montée en température très lente (dans un four) depuis la température ambiante (par exemple 20°C) jusqu'à 110°C, à raison de 10°C/heure ;
- palier de 8 heures à la température de 110°C, ce palier ayant pour but d'éliminer l'eau libre.

Les deux étapes ci-dessus réalisent le séchage de la pièce crue, telle qu'une plaque, après démoulage et peuvent être remplacées par un passage de 10 heures à l'étuve à 110°C.
- Montée en température plus rapide depuis la température de 110°C (cas du séchage au four, sinon depuis la température ambiante à laquelle la pièce à été ramenée après séchage à l'étuve) jusqu'à la température finale de 350°C, à raison de 30°C/heure ;
- palier de 4 heures à la température finale de 350°C ;
- descente depuis la température de 350°C jusqu'à la température ambiante (20°C).

D'autres traitements thermiques sont décrits ci-après. Ils correspondent à un autre traitement thermique de la pièce, par exemple de la plaque, vierge séchée (figure 2) et aux traitements thermiques de pièces, telles que des plaques, pourvues de divers revêtements, en tenant compte éventuellement des recommandations données par les fournisseurs (figures 3, 4 et 5).

Le premier traitement thermique (figure 2) est un traitement de cuisson d'une pièce, telle qu'une plaque, sans revêtement, mais ayant déjà subi un séchage, par exemple à 110°C pendant 10 heures en étuve, et ayant été ensuite ramené à la température ambiante. Si le séchage est réalisé dans un four, alors la température initiale est non plus la température ambiante, mais une température par exemple de 110°C, et le traitement thermique est réalisé dans ce même four.

Ce traitement thermique est donc le suivant :
- montée en température (depuis la température ambiante, par exemple) jusqu'à 300°C, à raison de 50°C/h (environ 5 h 45') ;
- palier à 300°C pendant 4 heures ;
- descente depuis la température de 300°C jusqu'à la température ambiante à raison, par exemple, de 50°C/h (environ 5 h 45').

Le deuxième traitement (figure 3) est un traitement de cuisson d'une pièce, telle qu'une plaque, émaillée :
- montée en température (depuis la température ambiante, par exemple) jusqu'à 550°C, à raison de 200°C/h ;
- palier à 550°C pendant 0,5 heure ;
- descente depuis la température de 550°C jusqu'à la température ambiante, à raison par exemple de 200°C/h.

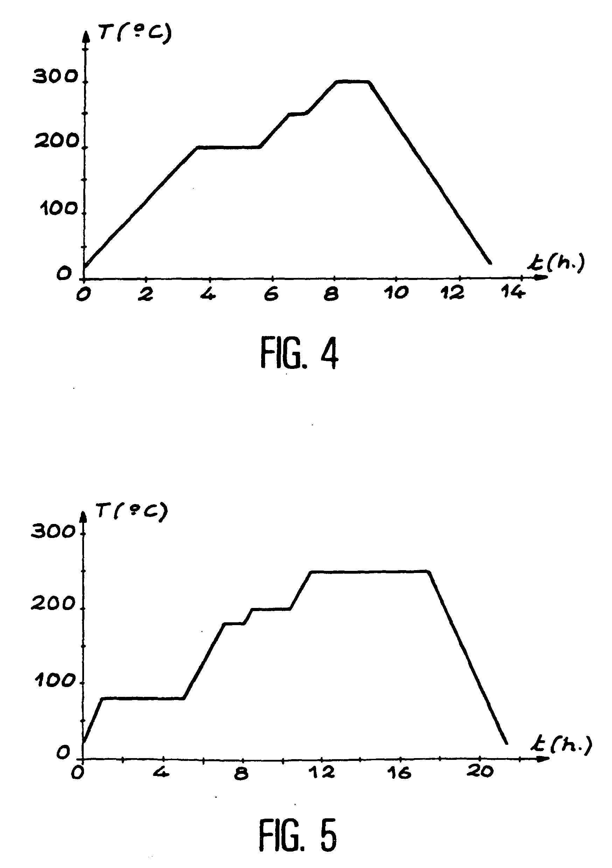

Le troisième traitement (figure 4) est un traitement de cuisson d'une pièce, telle qu'une plaque, avec un revêtement de RHODEFTAL® 200 ES :
- montée en température (depuis la température ambiante, par exemple) jusqu'à 200°C, à raison de 80°C/h ;
- palier à 200°C pendant 2 heures ;
- montée jusqu'à 250°C, à raison de 50°C par heure ;
- palier à 250°C pendant 3 minutes ;
- montée jusqu'à 300°C, à raison de 50°C/heure ;
- palier à 300°C pendant 1 heure ;
- descente jusqu'à la température ambiante, à raison de 70°C/h.

Le quatrième traitement thermique (figure 5) est un traitement de cuisson d'une pièce, telle qu'une plaque, avec un revêtement de KERIMID^{®} 701 A :
- montée en température (depuis la température ambiante, par exemple) jusqu'à 80°C, à raison de 50°C/h ;
- palier à 80°C pendant 4 heures ;
- montée jusqu'à 180°C, à raison de 50°C/h ;
- palier à 180°C pendant 1 heure ;
- montée jusqu'à 200°C, à raison de 60°C/h ;
- palier à 200°C pendant 2 heures ;
- montée jusqu'à 250°C, à raison de 50°C/h ;
- palier à 250°C pendant 6 heures ;
- descente jusqu'à la température ambiante, à raison de 60°C/h.

L'invention va maintenant être décrite en référence aux exemples suivants, donnés à titre illustratif et non limitatif.

### Exemples

On prépare une composition de béton selon l'invention, à partir des constituants dont la liste est donnée dans le tableau II suivant :

**Tableau II**

| Composition du béton pour plaque de cuisson par induction | |
|---|---|
| Constituants | Parts en poids |
| Ciment CPA HTS | 1 |
| Fumées de silice (FS) | 0,23 |
| Quartz broyé C 400 | 0,39 |
| Sable BE 31 | 0,5 |
| Fibres HD | 0,001 |
| Fibres HP | 0,069 |
| Fluidifiant - Extrait sec (OPTIMA^{®} 100) | 0,012 |
| Eau totale | 0,23 |

Le super-plastifiant (l'OPTIMA^{®} 100 de CHRYSO^{®}) est intégré à l'eau de gâchage.

La procédure de malaxage est la suivante :
- t = 0 : début homogénéisation des poudres ;
- t = 10' : ajout première part (2/3) du mélange (eau de gâchage + OPTIMA^{®} 100) ;
- t = 20' : ajout deuxième part (1/3) du mélange (eau de gâchage + OPTIMA^{®} 100) ;
- t = 25' : fin du malaxage et coulée.

La formulation est autolissante.

Selon l'essai que l'on souhaite réaliser, on coule alors soit des éprouvettes, par exemple de dimensions 5 x 5 x 35 mm³, soit des plaques.

Si l'on réalise des éprouvettes, la fabrication comprend la préparation du mélange de poudres et le malaxage, la coulée, le démoulage, le séchage à l'étuve à 110°C pendant 10 heures, la cuisson dans les conditions déjà mentionnées plus haut.

Il est précisé que la cuisson appliquée aux éprouvettes est réalisée dans les conditions déjà décrites pour les compositions revêtues ou non revêtues, bien que les éprouvettes ne reçoivent pas, quant à elles, de revêtement.

Si l'on fabrique des plaques, alors leur fabrication se déroule en sept étapes.

Les sept étapes sont les suivantes :
- préparation du mélange de poudres et malaxage ;
- coulée et mise en place par vibration ou non ;
- application d'un produit de cure (graisse silicone non connue classiquement comme produit de cure) sur la surface à l'état frais ;
- démoulage à 48 heures ;
- séchage (étuve à 110°C) pendant 24 heures ;
- application d'un revêtement (émail ou polymère) ;
- cuisson.

### Exemple 1

Dans cet exemple, les propriétés thermiques du béton, préparé ci-dessus, sont évaluées par la mesure du coefficient de dilatation thermique et par essai de choc thermique descendant.

### Exemple 1A

En ce qui concerne le coefficient de dilatation thermique, celui-ci est déterminé dans la gamme d'utilisation du matériau, c'est-à-dire entre 20°C et 400°C. On mesure l'évolution du déplacement (retrait ou dilatation), en fonction de la température sur des échantillons de dimensions 5 x 5 x 35 mm³, plusieurs passages étant réalisés afin d'évaluer l'effet d'un cyclage thermique sur le coefficient de dilatation. Les coefficients sont calculés par régression linéaire.

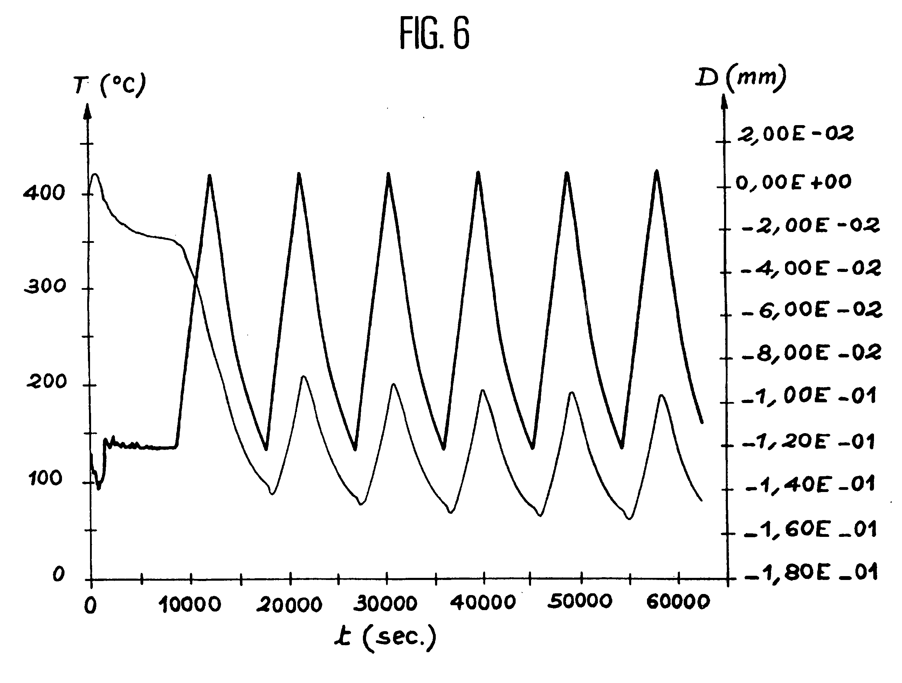

Un exemple de mesures est représenté sur la figure 6, qui montre donc les courbes obtenues en dilatométrie : la courbe du haut, en gras, représente la variation de la température (en °C), en fonction du temps (en secondes), tandis que la courbe du bas (trait fin) représente le déplacement (en mm), en fonction de du temps (en secondes).

Un phénomène de retrait est observé au premier chauffage sur les échantillons non traités thermiquement ; il est en revanche éliminé pour les échantillons traités thermiquement.

Les valeurs moyennes du coefficient de dilatation α calculées pour les divers cycles thermiques considérés (excepté le premier cycle pour les échantillons non traités thermiquement) sont comprises entre 5.5*10⁻⁶ K⁻¹ et 7.5*10⁻⁶ K⁻¹, ce qui est conforme à la valeur du cahier des charges (a de l'ordre de 5*10⁻⁶ K⁻¹).

Ces valeurs sont relativement stables au cours des cycles thermiques successifs.

### Exemple 1B

La résistance au choc thermique est déterminée sur des éprouvettes de dimensions 4 x 6 x 40 mm³ qui sont disposées dans une enceinte thermique régulée à des températures variant entre 200 et 700°C, une trappe dans le fond du four permet de les faire basculer instantanément dans un récipient rempli d'eau froide (T = 25°C).Il est à noter que ce choc thermique est très sévère. Après le choc thermique, les échantillons sont séchés pendant environ 20 minutes dans une étuve régulée à 150°C.

On trace l'évolution du module dynamique en fonction du ΔT (différence de température). Lorsque les éprouvettes atteignent un niveau critique d'endommagement, les mesures de fréquence de résonance permettant de calculer le module dynamique donnent des valeurs aberrantes et totalement dispersées : les essais sont stoppés à ce moment. Les résultats obtenus pour la formulation du tableau II sont rassemblés dans le tableau III.

**Tableau III**

| Comportement au choc thermique du matériau selon l'invention avant et après le Traitement Thermique selon la figure 1 | | |
|---|---|---|
| ΔT | E (GPa) | |
| (°C) | Sans TT | Après TT |
| 0 | 36,61 ± 1,24 | 31,42 ± 2,41 |
| 175 | 33,19 ± 1,72 | 30,57 ± 2,58 |
| 225 | 31,29 ± 1,29 | 28,26 ± 2,19 |
| 275 | 30,86 ± 1,59 | 26,99 ± 2,80 |
| 325 | 26,78 ± 1,88 | 25,72 ± 1,78 |
| 375 | 22,57 ± 2,49 | 24,17 ± 1,76 |
| 425 | 19,69 ± 2,47 | 21,26 ± 1,43 |
| 475 | 17,64 ± 2,05 | 17,58 ± 1,09 |
| 525 | 14,90 ± 1,80 | 12,84 ± 1,51 |
| 575 | 0,57 ± 0,95 | 6,33 ± 1,36 |

| | | |
|---|---|---|
| NB - TT : Traitement Thermique réalisé sur le béton seul, selon le profil de la figure 1. | | |

On note les points suivants :
- Le module dynamique initial mesuré après TT (selon la figure 1) est inférieur à celui mesuré sur échantillons non traités.
- Pour un ΔT de 325°C, le module perd 25 % de sa valeur initiale pour les échantillons non traités et 20 % pour les échantillons après traitement thermique (selon la figure 1). Le comportement au choc thermique est donc relativement satisfaisant.
- L'intérêt du traitement thermique étant de retarder la perte des propriétés mécaniques, on note que le module dynamique diminue plus progressivement et plus lentement sur les échantillons ayant subi le traitement thermique TT (figure 1) quand ΔT augmente.

On peut donc conclure que le traitement thermique TT (figure 1) a des effets bénéfiques sur le comportement au choc thermique ; les pertes de propriétés mécaniques enregistrées sur éprouvettes après TT (figure 1) sont plus progressives et décalées vers les plus grandes valeurs de ΔT, si on les compare aux éprouvettes non traités.

### Exemple 2

Dans cet exemple, on réalise la caractérisation mécanique du béton formulé ci-dessus.

Les propriétés mécaniques de la formulation sont déterminées avant et après traitement thermique TT selon la procédure définie sur la figure 1, à partir d'essais de flexion 4 points et de mesures du module dynamique, par fréquence de résonance, au « GRINDO SONIC^{®} » ; on examine par ailleurs la résistance aux chocs mécaniques du matériau à l'aide d'un marteau à ressort (marteau norvégien).

### Exemple 2A

Les essais de flexion 4 points et de mesures du module dynamique sont réalisés sur des éprouvettes de 10 mm x 10 mm x 100 mm.

L'ensemble des propriétés mécaniques obtenues est rassemblé dans le tableau IV.

**Tableau IV**

| Propriétés mécaniques du béton ayant la formulation du tableau II avant et après traitement thermique TT selon le profil de la figure 1 | | |
|---|---|---|
| | Avant TT | Après TT |
| Module dynamique (GPa) | 39,90 ± 1,40 | 34,57 ± 0,54 |
| σ à la rupture (MPa) | 15,82 ± 2,68 | 18,86 ± 1,41 |
| Module en flexion (GPa) | 29,84 ± 4,08 | 24,44 ± 2,15 |

On constate qu'une perte du module d'élasticité après traitement thermique est toujours enregistrée malgré les faibles vitesses de chauffe considérées (10°C/h jusqu'à 110°C et 30°C/h jusqu'à 350°C) ; en revanche, la contrainte à la rupture augmente légèrement et le matériau présente bien une rupture par endommagement progressif, ce qui favorise un bon comportement au choc thermique et un bon comportement à l'impact.

On note que la pâte obtenue après malaxage est suffisamment fluide pour permettre une mise en place aisée et conduire à l'obtention d'éprouvettes peu poreuses et a priori homogènes.

Toutefois, les propriétés pourraient être encore améliorées en utilisant une table vibrante.

### Exemple 2B

Cet exemple concerne la résistance aux chocs mécaniques.

En ce qui concerne la résistance aux chocs mécaniques, les essais ont été effectués à l'aide d'un « marteau norvégien » sur des plaques d'épaisseur 4 mm, préparées comme indiqué ci-dessus. Les tables sont donc à l'échelle 1. Les plaques reposent sur un support contreplaqué plus rigide que le PET envisagé dans le concept de la table de cuisson et donc plus contraignant. Les points d'impact sont situés dans la diagonale et espacés de 5 cm ; trois impacts sont réalisés par point pour des énergies croissantes, variant de 0,2 à 0,7 Joules. La surface des plaques est observée visuellement après chaque impact. Les examens révèlent que la surface est soit intacte, soit légèrement marquée (empreintes superficielles, localisées au point d'impact sans fissure) ; les plaques soumises au test donnent donc des résultats satisfaisants : le béton élaboré répond aux spécifications du cahier des charges en terme de tenue mécanique, puisque l'on admet que l'endommagement est toléré à partir du moment où il est peu marqué.

## Revendications

1. Composition de béton à poudres réactives comprenant les constituants suivants, dont les proportions sont exprimées en teneur en poids de constituant par rapport à la teneur en poids de ciment :
- ciment : 1 ;
- fumée de silice : 0,20 à 0,25, de préférence 0,23 ;
- quartz broyé : 0,35 à 0,40, de préférence 0,39 ;
- sable : 0,40 à 0,60, de préférence 0,50 ;
- fibres de verre totales : 0,05 à 0,10, de préférence 0,07 ;
dont :
- fibres de verre Haute Densité « HD » : 0,0005 à 0,005, de préférence 0,001 ;
- fibres de verre Haute Performance « HP » : 0,0495 à 0,0995, de préférence 0,0690 ;
- fluidifiant : 0,01 à 0,02, de préférence 0,012 ;
- eau totale : 0,20 à 0,25, de préférence 0,23.

2. Procédé de préparation d'une pièce à partir de la composition de béton selon la revendication 1, ledit procédé comprenant les étapes successives suivantes :
- mélange et malaxage des constituants de la composition de béton ;
- coulage du mélange obtenu dans un moule de forme adaptée à celle de la pièce à obtenir ;
- application d'un produit de cure sur la surface libre du mélange coulé dans le moule ;
- démoulage, moyennant quoi, on obtient une pièce crue ;
- séchage ;
- traitement thermique.

3. Procédé selon la revendication 2, dans lequel le produit de cure est choisi parmi les huiles ou graisses silicones résistant à une température supérieure ou égale à 110°C.

4. Procédé selon la revendication 2, dans lequel le séchage de la pièce crue est réalisée à une température de 100 à 120°C, de préférence de 105 à 115°C, par exemple de 110°C, pendant une durée telle que la pièce ne présente plus de variation de poids à l'issue du séchage.

5. Procédé selon la revendication 4, dans lequel le séchage est réalisé pendant une durée de 5 à 15 heures, par exemple de 10 heures.

6. Procédé selon la revendication 2, dans lequel, à l'issue de l'étape de séchage, on applique un revêtement sur la surface de la pièce.

7. Procédé selon la revendication 6, dans lequel le revêtement est choisi parmi les émaux à basse température et les polymères organiques.

8. Procédé selon la revendication 2, dans lequel le traitement thermique est réalisé à une température minimale de 250°C, de préférence de 300 à 350°C pendant une durée minimale de 1 heure.

9. Procédé selon la revendication 7, dans lequel le revêtement est un émail, et le traitement thermique est réalisé à une température allant jusqu'à 550°C.

10. Procédé selon la revendication 7, dans lequel le revêtement est un polymère organique, et le traitement thermique est réalisé à une température de 200 à 250°C.

11. Procédé selon la revendication 2, dans lequel le traitement thermique est réalisé de la manière suivante :
- montée en température jusqu'à la température finale de 350°C, à raison de 30°C/heure ;
- palier de 4 heures à la température finale de 350°C ;
- descente depuis la température de 350°C jusqu'à la température ambiante (20°C).

12. Procédé selon la revendication 2, dans lequel le traitement thermique est réalisé de la manière suivante :
- montée en température jusqu'à 300°C, à raison de 50°C/h ;
- palier à 300°C pendant 4 heures ;
- descente depuis la température de 300°C jusqu'à la température ambiante, à raison de 50°C/h.

13. Procédé selon la revendication 9, dans lequel le traitement thermique est réalisé de la manière suivante :
- montée en température jusqu'à 550°C, à raison de 200°C/h ;
- palier à 550°C pendant 0,5 heure ;
- descente depuis la température de 550°C jusqu'à la température ambiante, à raison de 200°C/h.

14. Procédé selon la revendication 2, dans lequel le traitement thermique est réalisé de la manière suivante :
- montée en température jusqu'à 200°C, à raison de 80°C/h ;
- palier à 200°C pendant 2 heures ;
- montée jusqu'à 250°C, à raison de 50°C par heure ;
- palier à 250°C pendant 3 minutes ;
- montée jusqu'à 300°C, à raison de 50°C/heure ;
- palier à 300°C pendant 1 heure ;
- descente jusqu'à la température ambiante, à raison de 70°C/h.

15. Procédé selon la revendication 10, dans lequel le traitement thermique est réalisé de la manière suivante :
- montée en température jusqu'à 80°C, à raison de 50°C/h ;
- palier à 80°C pendant 4 heures ;
- montée jusqu'à 180°C, à raison de 50°C/h ;
- palier à 180°C pendant 1 heure ;
- montée jusqu'à 200°C, à raison de 60°C/h ;
- palier à 200°C pendant 2 heures ;
- montée jusqu'à 250°C, à raison de 50°C/h ;
- palier à 250°C pendant 6 heures ;
- descente jusqu'à la température ambiante, à raison de 60°C/h.

16. Procédé selon l'une quelconque des revendications 2 à 15, dans lequel ladite pièce se présente sous la forme d'une plaque.

17. Procédé selon la revendication 16, dans lequel ladite plaque a une épaisseur maximale de 4 mm.

18. Appareil de cuisson thermique, par exemple à induction, comprenant la plaque préparée par le procédé selon l'une quelconque des revendications 16 et 17.

## Claims

1. Reactive powders concrete composition comprising the following constituents, the proportions whereof are expressed as constituent content by weight with reference to the cement content by weight:
- cement: 1;
- silica fume: 0.20 to 0.25, preferably 0.23;
- ground quartz: 0.35 to 0.40, preferably 0.39;
- sand: 0.40 to 0.60, preferably 0.50;
- total glass fibres: 0.05 to 0.10, preferably 0.07;
including
- High-Density "HD" glass fibres: 0.0005 to 0.005, preferably 0.001;
- High-Performance "HP" glass fibres: 0.0495 to 0.0995, preferably 0.0690;
- thinner: 0.01 to 0.02, preferably 0.012;
- total water: 0.20 to 0.25, preferably 0.23.

2. Method for preparing a part using the concrete composition according to claim 1, said method comprising the following successive steps:
- mixing and kneading of the constituents of the concrete composition;
- pouring the obtained mixture into a mould of a suitable shape for that of the part to be obtained;
- application of a curing product on the free surface of the mixture poured into the mould;
- removal from the mould, whereby a green part is obtained;
- drying;
- heat treatment.

3. Method according to claim 2, wherein the curing product is chosen from silicone oils or greases resistant to a temperature greater than or equal to 110°C.

4. Method according to claim 2, wherein the green part is dried at a temperature of 100 to 120°C, preferably 105 to 115°C, for example 110°C, for a time such that the part no longer exhibits weight variations after drying.

5. Method according to claim 4, wherein the drying is carried out for a time of 5 to 15 hours, for example 10 hours.

6. Method according to claim 2, wherein, following the drying step, a coating is applied on the surface of the part.

7. Method according to claim 6, wherein the coating is selected from low-temperature enamels and organic polymers.

8. Method according to claim 2, wherein the heat treatment is carried out at a minimum temperature of 250°C, preferably from 300 to 350°C for a minimum time of 1 hour.

9. Method according to claim 7, wherein the coating is an enamel, and the heat treatment is carried out at a temperature of up to 550°C.

10. Method according to claim 7, wherein the coating is an organic polymer, and the heat treatment is carried out at a temperature of 200 to 250°C.

11. Method according to claim 2, wherein the heat treatment is carried out as follows:
- temperature rise to the final temperature of 350°C, at a rate of 30°C/hour;
- a 4-hour plateau at the final temperature of 350°C;
- descent from the temperature of 350°C to ambient temperature (20°C).

12. Method according to claim 2, wherein the heat treatment is carried out as follows:
- temperature rise to 300°C, at a rate of 50°C/hour;
- plateau at 300°C for 4 hours;
- descent from the temperature of 300°C to ambient temperature, at a rate of 50°C/hour.

13. Method according to claim 9, wherein the heat treatment is carried out as follows:
- temperature rise to 550°C, at a rate of 200°C/hour;
- plateau at 550°C for 0.5 hours;
- descent from the temperature of 550°C to ambient temperature, at a rate of 200°C/hour.

14. Method according to claim 2, wherein the heat treatment is carried out as follows:
- temperature rise to 200°C, at a rate of 80°C/hour;
- plateau at 200°C for 2 hours;
- rise to 250°C, at a rate of 50°C per hour;
- plateau at 250°C for 3 minutes;
- rise to 300°C, at a rate of 50°C/hour;
- plateau at 300°C for 1 hour;
- descent to ambient temperature, at a rate of 70°C/hour.

15. Method according to claim 10, wherein the heat treatment is carried out as follows:
- temperature rise to 80°C, at a rate of 50°C/hour;
- plateau at 80°C for 4 hours;
- rise to 180°C, at a rate of 50°C/hour;
- plateau at 180°C for 1 hour;
- rise to 200°C, at a rate of 60°C/hour;
- plateau at 200°C for 2 hours;
- rise to 250°C, at a rate of 50°C/hour;
- plateau at 250°C for 6 hours;
- descent to ambient temperature, at a rate of 60°C/hour.

16. Method according to any one of claims 2 to 15, wherein said part is in the form of a plate.

17. Method according to claim 16, wherein said plate has a maximum thickness of 4 mm.

18. Thermal cooking appliance, for example using induction, comprising the plate prepared using the method according to any one of claims 16 and 17.

## Patentansprüche

1. Reaktivpulver-Betonzusammensetzung umfassend die folgenden Bestandteile, deren Anteile als Gewichtsmenge des Bestandteils bezüglich der Gewichtsmenge des Zements angegeben sind:
- Zement: 1;
- pyrogenes Siliziumdioxid: 0,20 bis 0,25, vorzugsweise 0,23;
- gemahlener Quarz: 0,35 bis 0,40, vorzugsweise 0,39;
- Sand: 0,40 bis 0,60, vorzugsweise 0,50;
- Glasfasern insgesamt: 0,05 bis 0,10, vorzugsweise 0,07;
davon
- Glasfasern hoher Dichte "HD": 0,0005 bis 0,005, vorzugsweise 0,001;
- Hochleistungsglasfasern "HP": 0,0495 bis 0,0995, vorzugsweise 0,0690;
- Fließmittel: 0,01 bis 0,02, vorzugsweise 0,012;
- Gesamtwasser: 0,20 bis 0,25, vorzugsweise 0,23.

2. Verfahren zur Herstellung eines Werkstücks aus der Betonzusammensetzung gemäß Anspruch 1, wobei das Verfahren die folgenden aufeinanderfolgenden Schritte umfasst:
- Mischen und Verkneten der Bestandteile der Betonzusammensetzung;
- Giessen des erhaltenen Gemischs in eine Form mit einer an die des zu erhaltenden Werkstücks angepassten Form;
- Auftrag eines Härtungsprodukts auf die freie Oberfläche des in die Form gegossenen Gemischs;
- Ausformen, wodurch ein Rohling erhalten wird;
- Trocknen;
- Wärmebehandlung.

3. Verfahren gemäß Anspruch 2, wobei das Härtungsprodukt aus bis zu einer Temperatur über oder gleich 110 °C stabilen Silikonölen oder -fetten ausgewählt ist.

4. Verfahren gemäß Anspruch 2, wobei das Trocknen des Rohlings bei einer Temperatur von 100 bis 120 °C, vorzugsweise 105 bis 115 °C, zum Beispiel 110 °C, während einer solchen Zeitdauer durchgeführt wird, dass das Werkstück am Ende des Trocknens keine Gewichtsveränderung mehr aufweist.

5. Verfahren gemäß Anspruch 4, wobei das Trocknen während einer Zeitdauer von 5 bis 15 Stunden, zum Beispiel 10 Stunden durchgeführt wird.

6. Verfahren gemäß Anspruch 2, wobei am Ende des Trocknungsschrittes eine Beschichtung auf die Oberfläche des Werkstücks aufgebracht wird.

7. Verfahren gemäß Anspruch 6, wobei die Beschichtung aus Niedertemperaturemail und organischen Polymeren ausgewählt ist.

8. Verfahren gemäß Anspruch 2, wobei die Wärmebehandlung bei einer Mindesttemperatur von 250 °C, vorzugsweise 300 °C bis 350 °C während einer Mindestzeitdauer von 1 Stunde durchgeführt wird.

9. Verfahren gemäß Anspruch 7, wobei die Beschichtung aus Email ist und die Wärmebehandlung bei einer Temperatur von bis zu 550 °C durchgeführt wird.

10. Verfahren gemäß Anspruch 7, wobei die Beschichtung ein organisches Polymer ist und die Wärmebehandlung bei einer Temperatur von 200 bis 250 °C durchgeführt wird.

11. Verfahren gemäß Anspruch 2, wobei die Wärmebehandlung auf die folgende Weise durchgeführt wird:
- Temperaturanstieg um 30°C/Stunde bis zur Endtemperatur von 350 °C;
- 4 Stunden Halten bei der Endtemperatur von 350 °C;
- Rückgang von der Temperatur von 350 °C bis Raumtemperatur (20°C).

12. Verfahren gemäß Anspruch 2, wobei die Wärmebehandlung auf die folgende Weise durchgeführt wird:
- Temperaturanstieg um 50 °C/h bis zur Endtemperatur von 300 °C;
- 4 Stunden Halten bei 300 °C;
- Rückgang um 50 °C/h von der Temperatur von 300 °C bis Raumtemperatur.

13. Verfahren gemäß Anspruch 9, wobei die Wärmebehandlung auf die folgende Weise durchgeführt wird:
- Temperaturanstieg um 200 °C/h bis zu einer Temperatur von 550 °C;
- 0,5 Stunden Halten bei 550 °C;
- Rückgang um 200 °C/h von der Temperatur von 550 °C bis Raumtemperatur.

14. Verfahren gemäß Anspruch 2, wobei die Wärmebehandlung auf die folgende Weise durchgeführt wird:
- Temperaturanstieg um 80 °C/h bis 200 °C;
- 2 Stunden Halten bei 200 °C;
- Anstieg um 50 °C je Stunde auf 250 °C;
- 3 Minuten Halten bei 250 °C;
- Anstieg um 50°C/Stunde bis 300 °C;
- 1 Stunde Halten bei 300 °C;
- Rückgang um 70 °C/h bis Raumtemperatur.

15. Verfahren gemäß Anspruch 10, wobei die Wärmebehandlung auf die folgende Weise durchgeführt wird:
- Temperaturanstieg um 50 °C/h bis 80 °C;
- 4 Stunden Halten bei 80 °C;
- Anstieg um 50 °C/h bis 180°C;
- 1 Stunde Halten bei 180 °C;
- Anstieg um 60 °C/h bis 200 °C;
- 2 Stunden Halten bei 200 °C;
- Anstieg um 50 °C/h bis 250 °C;
- 6 Stunden Halten bei 250 °C;
- Rückgang um 60 °C/h bis Raumtemperatur.

16. Verfahren gemäß einem der Ansprüche 2 bis 15, wobei das Werkstück die Form einer Platte aufweist.

17. Verfahren gemäß Anspruch 16, wobei die Platte eine Höchstdicke von 4 mm aufweist.

18. Gerät zum Kochen mit Wärme, zum Beispiel Induktion, umfassend die durch das Verfahren gemäß einem der Ansprüche 16 und 17 hergestellte Platte.
